# EUROPEAN PATENT APPLICATION

(11) **EP 2 566 245 A1**
(43) Date of publication of application: **06.03.2013**
(21) Application number: 11774968.9
(22) Date of filing: 25.04.2011
(51) Int. Cl.: H04W 36/14, H04W 88/18

(54) **MOBILE COMMUNICATION SYSTEM AND MOBILE STATION**

(30) Priority: 26.04.2010 JP 2010101529
(71) Applicant: NTT DoCoMo, Inc., Tokyo 100-6150 (JP)
(72) Inventor: KOSHIMIZU, Takashi, Tokyo 100-6150 (JP); NISHIDA, Katsutoshi, Tokyo 100-6150 (JP); KOBAYASHI, Mitsuru, Tokyo 100-6150 (JP)
(74) Representative: HOFFMANN EITLE
(86) International application number: PCT/JP2011/060085
(87) International publication number: WO 2011/136187

(57) **Abstract**

A mobile communication system according to the present invention is configured to be capable of switching a mobile station UE from a first communication state performing first AV communication via E-UTRAN to a second communication state performing second AV communication via UTRAN/GERAN, by performing a SRVCC procedure, codec information to be used in the second AV communication is exchanged between the mobile station UE and a MSC server/MGW in the first communication state before the SRVCC procedure is started, and the mobile station UE is configured to, in the SRVCC procedure, send the MSC server/MGW a command to switch to the exchanged codec information "Pseudo 3G H324M negotiation".

## Description

### TECHNICAL FIELD

The present invention relates to a mobile communication system and a mobile station.

### BACKGROUND ART

In 3GPP, application of SRVCC (Single Radio Voice Call Continuity) to AV (Audio & Video) communication (e.g., video telephone) is currently under consideration (see, for example, Non-patent Literature 1).

SRVCC is a technique for providing switching (handover) between voice communication in a PS (Packet Switch) domain (IMS-based voice communication) and voice communication in a CS (Circuit Switch) domain (see, for example, Non-patent Literature 2).

Here, SRVCC is configured to provide switching between an LTE (Long Term Evolution) radio access system (an E-UTRAN: Evolved Universal Terrestrial Radio Access Network) and a cellular radio access system (a UTRAN: Universal Terrestrial Radio Access Network or a GERAN: GSM EDGE Radio Access Network).

To perform AV communication via the UTRAN/GERAN, codec information called 3G-H324M is needed.

3G-H324M is codec information for AV communication which is improved from codec information defined in H324M of ITU so as to be usable in a cellular radio access system. By using 3G-H324M, AV communication can be efficiently performed in a 64kbps bearer.

A negotiation procedure for such codec information includes the following five steps.

(a) H223 Multiplex Level Detection
(b) Terminal Capability Exchange
(c) Master Slave Determination
(d) Open Logical Channels
(e) Multiplex Table Entries Exchange

However, performing this negotiation procedure in the above-described SRVCC procedure has a problem of causing a handover delay of about five to eight seconds.

To solve this problem, Non-patent Literature 1 proposes a stepwise approach including the following steps.

In Step (1), voice communication is started. In Step (2), an AV communication procedure using 3G-H324M is started. In this step, the voice communication in (1) is tentatively used for a few seconds. Eventually, after the AV communication is established, in Step (3), the voice communication started in Step (1) is switched to the AV communication started in step (2) by using a technique called SCUDIF (Service Change and UDI Fallback) defined in Non-patent Literature 3.

### CITATION LIST

### NON-PATENT LITERATURES

NON-PATENT LITERATURE 1: 3GPP contribution TD S2-10yyzz
NON-PATENT LITERATURE 2: 3GPP TS23.216
NON-PATENT LITERATURE 3: 3GPP TS23.172

### SUMMARY OF THE INVENTION

### PROBLEM TO BE SOLVED BY THE INVENTION

However, SCUDIF is a technique for switching from voice communication to AV communication, and is not a technique for AV communication switching from AV communication performed in a PS domain to AV communication performed in a CS domain. Accordingly, there is a problem of giving a poor user experience.

Further, since the voice communication and the AV communication are provided simultaneously in the technique of Non-patent Literature 1, voices of the same user may overlap or user's voice may be instantaneously disrupted due to a mismatch in the switching timing.

In addition to the problems above, the technique in Non-patent Literature 1 has a problem of being not appropriate in view of effective use of resources since the voice communication used only for a few seconds needs to be started.

The present invention has been made in consideration of the problems above, and has an objective to provide a mobile communication system and a mobile station where SRVCC can be applied to AV communication efficiently while improving user experience.

The first feature of the present invention is summarized in that a mobile communication system including a radio access system of a first communication scheme which does not support circuit-switched communication, a mobile communication network accommodating the radio access system of the first communication scheme, a radio access system of a second communication scheme which supports the circuit-switched communication, and a core network of the second communication scheme accommodating the radio access system of the second communication scheme, wherein the mobile communication system is configured to be capable of switching a mobile station from a first communication state performing first AV communication via the radio access system of the first communication scheme to a second communication state performing second AV communication via the radio access system of the second communication scheme, by performing a switching procedure, the mobile communication system is configured that codec information to be used in the second AV communication is exchanged between the mobile station and a server device in the core network of the second communication scheme in the first communication state before the switching procedure is started, and the mobile station is configured to, in the switching procedure, send the server device a command to switch to the exchanged codec information.

The second feature of the present invention is summarized in that a mobile station used in a mobile communication system including a radio access system of a first communication scheme which does not support circuit-switched communication, a mobile communication network accommodating the radio access system of the first communication scheme, a radio access system of a second communication scheme which supports the circuit-switched communication, and a core network of the second communication scheme accommodating the radio access system of the second communication scheme, wherein the mobile station includes: a handover processing unit configured to be capable of switching from a first communication state performing first AV communication via the radio access system of the first communication scheme to a second communication state performing second AV communication via the radio access system of the second communication scheme, by performing a switching procedure; and a negotiation unit configured to, in the first communication state, exchange codec information to be used in the second AV communication, with a server device in the core network of the second communication scheme before the switching procedure is started, and the handover processing unit is configured to, in the switching procedure, send the server device a command to switch to the exchanged codec information.

### EFFECTS OF THE INVENTION

As described above, the present invention can provide a mobile communication system and a mobile station where SRVCC can be applied to AV communication efficiently while improving user experience.

### BRIEF DESCRIPTION OF THE DRAWINGS

[Fig. 1] Fig. 1 is a diagram of the overall configuration of a mobile communication system according to a first embodiment of the present invention.
[Fig. 2] Fig. 2 is a functional block diagram of a mobile station according to the first embodiment of the present invention.
[Fig. 3] Fig. 3 is a procedure diagram showing operations of the mobile communication system according to the first embodiment of the present invention.

### MODES FOR CARRYING OUT THE INVENTION

### (Mobile Communication System according to the First Embodiment of the Present Invention)

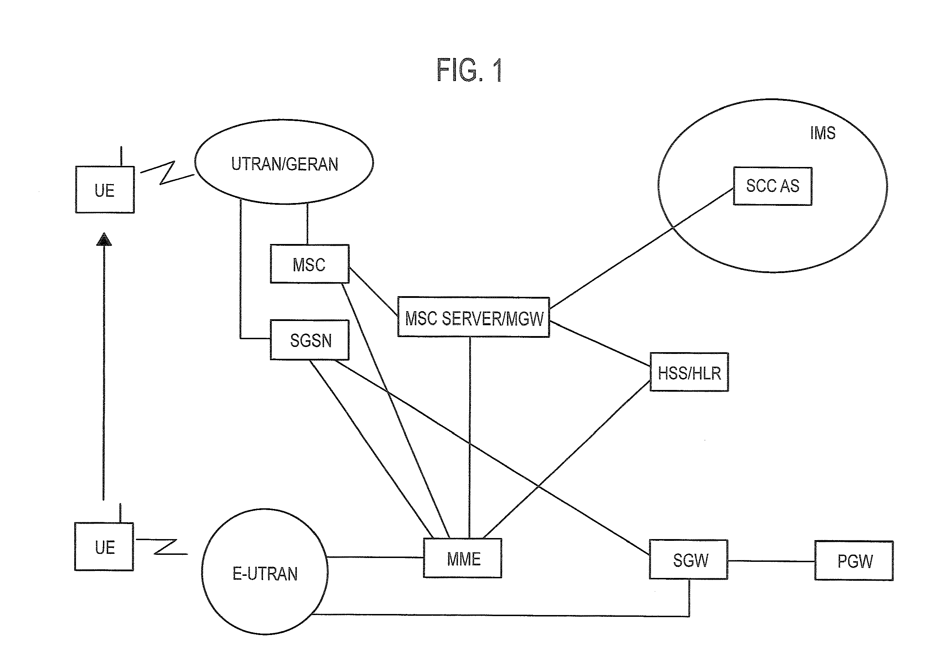

A description is given of a mobile communication system according to a first embodiment of the present invention with reference to Figs. 1 to 3.

As shown in Fig. 1, the mobile communication system according to the present embodiment includes an E-UTRAN, a mobile communication network accommodating the E-UTRAN, a UTRAN/GERAN, a cellular core network, and an IMS (IP Multimedia Subsystem, a service control network).

An eNodeB (not shown) is arranged in the E-UTRAN, and an RNC (Radio Network Controller) (not shown) is arranged in the UTRAN/GERAN.

In the mobile communication network, an MME (Mobility Management Entity, mobility management node), an SGW (Serving-Gateway, a serving-gateway device), a PGW (PDN-Gateway, a gateway device for packet data network), an HSS (Home Subscriber Server) /HLR (Home Location Register), and the like are arranged.

MME and SGW are arranged in a current network of a mobile station UE#1, a PGW and an HSS/HLR are arranged in a home network of the mobile station UE #1.

In the cellular core network, an MSC (Mobile-service Switching Center, a circuit switch), an SGSN (Serving GPRS Support Node, a packet switch), and an MSC server/MGW (Media Gateway for SRVCC, a server device) are arranged. Here, the MSC, the SGSN, and the MSC server/MGW are arranged in a current network of the mobile station UE#1.

Note that the MSC server/MGW may be separated into an MSC server configured to process control signals and an MGW configured to perform operations such as conversion of a speech signal for VoIP communication to a speech signal for circuit-switched communication.

In the IMS, an SCC AS (Service Centralization and Continuity Application Server) and the like are arranged.

The mobile communication system according to the present embodiment is configured to perform an SRVCC procedure (switching procedure) to switch the mobile station UE from a first communication state performing first AV communication via the E-UTRAN to a second communication state performing second AV communication via the UTRAN/GERAN.

Further, the mobile communication system according to the present embodiment is configured such that, in the first communication state, codec information to be used in the second AC communication is exchanged between the mobile station UE and the MSC server/MGW before the SRVCC procedure is started.

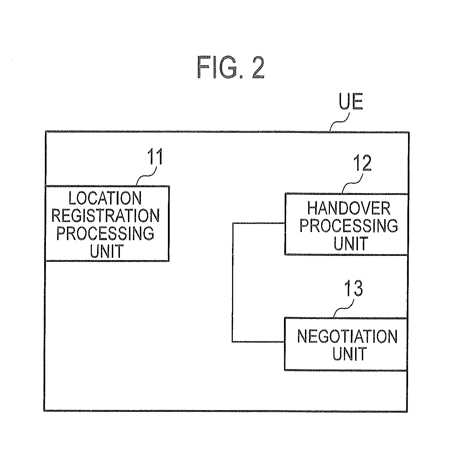

As shown in Fig. 2, the mobile station UE includes a location registration processing unit 11, a handover processing unit 12, and a negotiation unit 13.

The location registration processing unit 11 is configured to perform processing for location registration of the mobile station UE. Here, the location registration processing unit 11 is configured to be capable of performing "Combined TA/LA Location Update", that is, configured to be capable of performing location registration in both the E-UTRAN and the UTRAN/GERAN.

The handover processing unit 12 is configured to be capable of switching the mobile station UE from the first communication state to the second communication state by performing the SRVCC procedure.

The negotiation unit 13 is configured to exchange the codec information to be used in the second AV communication with the MSC server/MGW via the MME and the MSC when in the first communication state, before the SRVCC procedure is started.

Here, as will be described later, the handover processing unit 12 is summarized as being configured to send the MSC server/MGW a command to switch to the codec information exchanged by the negotiation unit 13, e.g., "Pseudo-3G H324M negotiation" in the SRVCC procedure.

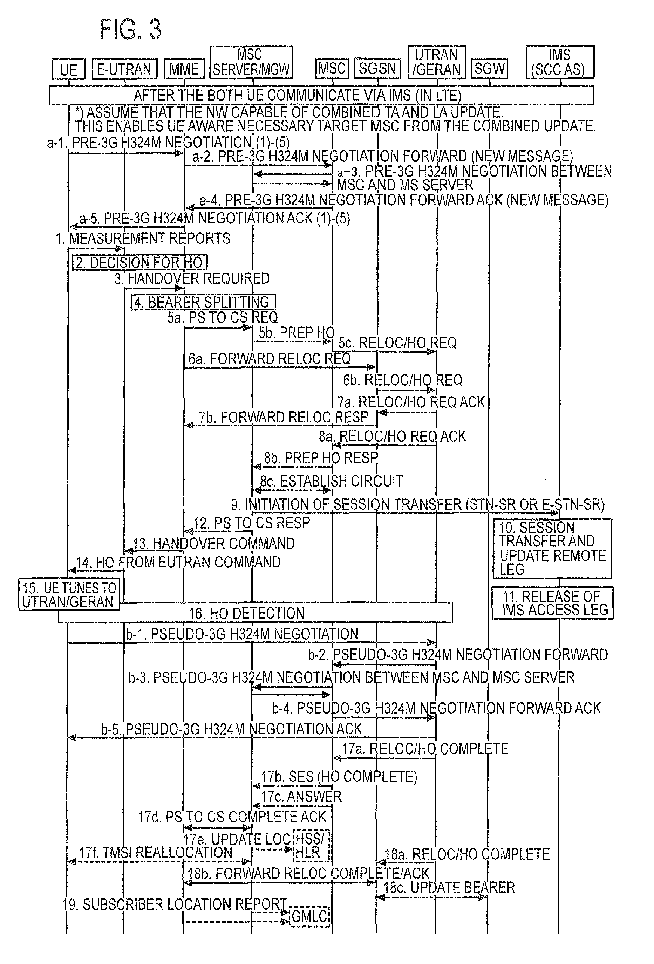

With reference to Fig. 3, a description is given below of operations performed in the mobile communication system according to the present embodiment to switch the mobile station UE from the first communication state to the second communication state.

As shown in Fig. 3, it is assumed that the mobile station UE in the first communication state and the MME knows the switch-destination MSC since "Combined TA/LA Location Update" is performed.

In Step a-1, the mobile station UE in the first communication state sends the MME "Pre-3G H324M negotiation", for example. In Step a-2, the MME sends the MSC "Pre-3G H324M negotiation Forward", for example.

In Step a-3, "Pre-3G H324M negotiation" is exchanged between the MSC and the MSC server/MGW.

In Step a-4, the MSC sends the MME "Pre-3G H324M negotiation Forward Ack". In Step a-5, the MME sends the mobile station UE "Pre-3G H324M negotiation Ack".

Note that the names of these messages, "Pre-3G H324M negotiation", "Pre-3G H324M negotiation Forward", and "Pre-3G H324M negotiation Forward Ack", and "Pre-3G H324M negotiation Ack", are temporary, and might be changed in the future.

The procedure in Steps a-1 to a-5 is repeated five times so that information (e.g., codec information) exchanged in the following five steps included in the 3G-H324M negotiation procedure is exchanged between the mobile station UE and the MSC server/MGW.

(1) H223 Multiplex Level Detection
(2) Terminal Capability Exchange
(3) Master Slave Determination
(4) Open Logical Channels
(5) Multiplex Table Entries Exchange

Note that the procedure in Steps a-1 to a-5 can be performed at any timing in the first communication state.

Further, "Pre-3G H324M negotiation" and "Pre-3G H324M negotiation Ack" are existing messages, whereas "Pre-3G H324M negotiation Forward" and "Pre-3G H324M negotiation Forward Ack" and newly-defined messages.

In Step 1, the mobile station UE sends the E-UTRAN "measurement report" including a measurement result of a designated neighboring cell.

The E-UTRAN decides to hand over the mobile station UE from an E-UTRAN-coverage cell to a UTRAN-coverage cell in Step 2, and sends the MME "Handover Required" in Step 3.

The MME performs "Bearer Splitting" in Step 4, and sends the MSC server/MGW "PS to CS Request" in Step 5a.

In Step 5b, in response to "PS to CS Request" received, the MSC server/MGW sends the MSC "Preparation HO". In Step 5c, the MSC sends the UTRAN/GERAN "Relocation HO Request".

In Step 6a, the MME sends the SGSN "Forward Relocation Request". In Step 6b, the SGSN sends the UTRAN/GERAN "Relocation HO Request".

In Step 7a, the UTRAN/GERAN sends the SGSN "Relocation HO Request Ack". In Step 7b, the SGSN sends the MME "Forward Relocation Response".

In Step 8a, the UTRAN/GERAN sends the MSC "Relocation HO Request Ack". In Step 8b, the MSC sends the MSC server/MGW "Preparation HO Response". In Step 8c, a CS bearer is established between the MSC server/MGW and the MSC.

In Step 9, the MSC server/MGW sends the SCC AS in the IMS "Initiation of Session Transfer (STN-SR or E-STN-SR)".

The SCC AS updates a session with the communication counterpart of the mobile station UE in Step 10, and releases a session in the PS domain in Step 11.

In Step 12, the MSC server/MGW sends the MME "PS to CS Response". In Step 13, the MME sends the E-UTRAN "Handover Command". In Step 14, the E-UTRAN sends the mobile station UE "HO from E-UTRAN Command".

In Steps 15 and 16, the radio communication of the mobile station UE is switched from the E-UTRAN to the UTRAN/GERAN.

In Step b-1, the mobile station UE sends the UTRAN/GERAN "Pseudo-3G H324M negotiation", for example. In Step b-2, the UTRAN/GERAN sends the MSC "Pseudo-3G H324M negotiation Forward", for example.

In Step b-3, "Pseudo-3G H324M negotiation" is exchanged between the MSC and the MSC server/MGW.

In Step b-4, the MSC sends the UTRAN/GERAN "Pseudo-3G H324M negotiation Forward Ack". In Step b-5, the UTRAN/GERAN sends the mobile station UE "Pseudo-3G H324M negotiation Ack".

After the procedure in Steps b-1 to b-5 is performed, the MSC server/MGW and the mobile station UE switch codec information which they use to the codec information exchanged in Steps a-1 to a-5. Here, the procedure in Steps b-1 to b-5 is performed once.

In Step 17a, the UTRAN/GERAN sends the MSC "Relocation HO Complete". The MSC sends the MSC server/MGW "SES (HO Complete)" in Step 17b, and "Answer" in Step 17c.

In Step 17d, the MSC server/MGW sends the MME "Relocation HO Complete", and the MME sends the MSC server/MGW "Relocation HO Complete Ack".

In Step 17e, the MSC server/MGW sends the HSS/HLR "Update Location". In Step 17f, "TMSI Reallocation" is carried out between the MSC server/MGW and the mobile station UE.

In Step 18a, the UTRAN/GERAN sends the SGSN "Relocation HO Complete". In Step 18b, the SGSN sends the MME "Relocation HO Complete", and the MME sends the SGSN "Relocation HO Complete Ack".

In Step 18c, "Update Bearer" is carried out between the SGW and the SGSN. In Step 18d, the MSC server/MGW and the MME send a GMLC (Gateway Mobile Location Centre) "Subscriber Location Report".

The mobile communication system according to the present invention is configured to perform the exchange of codec information to be used in the second AV communication not in the SRVCC procedure, but before the SRVCC procedure is started. Accordingly, SRVCC can be efficiently performed with a suppressed switching delay and without wastefully starting voice communication. As a result, user experience can be improved.

The features of the present embodiment described above can be expressed as follows.

A first feature of the present embodiment is summarized as a mobile communication system including a radio access system (an E-UTRAN) of an LTE scheme (a first communication scheme) which does not support circuit-switched communication, a mobile communication network accommodating the E-UTRAN, a radio access system (an UTRAN/GERAN) of a cellular scheme (a second communication scheme) which supports the circuit-switched communication, and a core network of the cellular scheme accommodating the UTRAN/GERAN, the mobile communication system being configured to be capable of switching a mobile station UE from a first communication state performing first AV communication via the E-UTRAN to a second communication state performing second AV communication via the UTRAN/GERAN by performing a switching procedure. The mobile communication system is configured that, in the first communication state, codec information to be used in the second AV communication is exchanged between the mobile station UE and an MSC server/MGW (a server device in the core network of the second communication scheme) before the switching procedure is started. The mobile station is configured to, in the switching procedure, send the MSC server/MGW a command to switch to the exchanged codec information.

A second feature of the present embodiment is summarized as a mobile station used in a mobile communication system including an E-UTRAN, a mobile communication network accommodating the E-UTRAN, an UTRAN/GERAN, and a cellular core network accommodating the UTRAN/GERAN, the mobile station comprising: a handover processing unit 12 configured to be capable of switching from a first communication state performing first AV communication via the E-UTRAN to a second communication state performing second AV communication via the UTRAN/GERAN, by performing a switching procedure; and a negotiation unit 13 configured to, in the first communication state, exchange codec information to be used in the second AV communication with an MSC server/MGW before the switching procedure is started. The handover processing unit 12 is configured to, in the switching procedure, send the MSC server/MGW a command to switch to the exchanged codec information.

Note that the operations of the MSC server/MGW, the MME, the SGW, the SCC AS, the SGSN, the MSC, the HSS/HLR, and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the MSC server/MGW, the MME, the SGW, the SCC AS, the SGSN, the MSC, the HSS/HLR, and the mobile station UE. Also, the storage medium and the processor may be provided in the MSC server/MGW, the MME, the SGW, the SCC AS, the SGSN, the MSC, the HSS/HLR, and the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

### INDUSTRIAL APPLICABILITY

As described above, the present invention can provide a mobile communication system and a mobile station where SRVCC can be applied to AV communication efficiently while improving user experience.

### EXPLANATION OF REFERENCE NUMERALS

UE...mobile station
MME...mobility management node
11 ... Location registration processing unit
12, 21...handover processing unit
13, 22...negotiation unit

## Claims

1. A mobile communication system including a radio access system of a first communication scheme which does not support circuit-switched communication, a mobile communication network accommodating the radio access system of the first communication scheme, a radio access system of a second communication scheme which supports the circuit-switched communication, and a core network of the second communication scheme accommodating the radio access system of the second communication scheme, wherein
the mobile communication system is configured to be capable of switching a mobile station from a first communication state performing first AV communication via the radio access system of the first communication scheme to a second communication state performing second AV communication via the radio access system of the second communication scheme, by performing a switching procedure,
the mobile communication system is configured that codec information to be used in the second AV communication is exchanged between the mobile station and a server device in the core network of the second communication scheme in the first communication state before the switching procedure is started, and
the mobile station is configured to, in the switching procedure, send the server device a command to switch to the exchanged codec information.

2. A mobile station used in a mobile communication system including a radio access system of a first communication scheme which does not support circuit-switched communication, a mobile communication network accommodating the radio access system of the first communication scheme, a radio access system of a second communication scheme which supports the circuit-switched communication, and a core network of the second communication scheme accommodating the radio access system of the second communication scheme, wherein
the mobile station comprises:
a handover processing unit configured to be capable of switching from a first communication state performing first AV communication via the radio access system of the first communication scheme to a second communication state performing second AV communication via the radio access system of the second communication scheme, by performing a switching procedure; and
a negotiation unit configured to, in the first communication state, exchange codec information to be used in the second AV communication, with a server device in the core network of the second communication scheme before the switching procedure is started, and
the handover processing unit is configured to, in the switching procedure, send the server device a command to switch to the exchanged codec information.
